# FASCICULE DE BREVET EUROPEEN

(11) **EP 2 861 547 B1**
(45) Date de publication et mention de la délivrance du brevet: **30.05.2018**
(21) Numéro de dépôt: 13729384.1
(22) Date de dépôt: 18.06.2013
(51) Int. Cl.: C04B 41/72, C04B 41/63

(54) **COMPOSITION DÉS ACTIVANTE FACILITANT LE DÉMOULAGE**
DEAKTIVIERUNGSZUSAMMENSETZUNG ZUR FORMABLÖSUNGSERLEICHTERUNG
DEACTIVATING COMPOSITION FACILITATING MOLD RELEASE

(30) Priorité: 18.06.2012 FR 1255672
(43) Date de publication de la demande: 22.04.2015
(73) Titulaire: Chryso, 92440 Issy-Les-Moulineaux (FR)
(72) Inventeur: BURLERAUX, Amélie, F-45390 Puiseaux (FR); MATEO, Sandrine, F-77760 Ury (FR)
(74) Mandataire: Lavoix
(86) Numéro de dépôt international: PCT/EP2013/062622
(87) Numéro de publication internationale: WO 2013/189929

(56) Documents cités:
- EP-A1- 2 360 132
- DE-U1-202010 015 781
- US-A1- 2009 197 992

## Description

La présente invention concerne une composition utile pour désactiver des compositions à base de liant hydraulique et pour faciliter leur démoulage et son procédé de préparation. Elle concerne également un procédé pour sa mise en oeuvre et son utilisation pour la désactivation négative ainsi que pour faciliter le démoulage des pièces moulées.

### [Arrière plan technologique]

Le béton est le matériau de construction le plus maniable dans la confection d'éléments pouvant avoir des formes et des aspects très divers.

Le béton désactivé, dont les granulats sont apparents, permet notamment de le décliner sous une large palette d'aspects et de couleurs. On le rencontre sur les chantiers de sols (trottoirs, places, parkings, cours, promenades...) mais également dans la fabrication de mobilier urbain (jardinières, poubelles...), de dalles gravillonnées ou encore de panneaux muraux.

L'aspect final du béton désactivé dépend principalement de sa composition. En particulier, les granulats utilisés peuvent être de différentes tailles, formes et couleurs (marbre blanc, rocaille rouge...). Par ailleurs, la teinte du ciment peut ajouter une touche spécifique, puisqu'il peut être choisi gris, blanc ou teinté par un colorant.

La réalisation de béton désactivé nécessite l'utilisation d'un désactivant, généralement appelé « désactivant de surface », comprenant un agent permettant de retarder la prise du béton en surface, appelé agent retardateur de prise.

Lorsque l'on souhaite réaliser des pièces moulées de grande surface ou des pièces dont la surface désactivée n'est pas au contact du moule, par exemple des pièces destinées à constituer des sols, le désactivant est pulvérisé à la surface du béton après sa mise en place et le talochage. Ainsi utilisé, l'agent désactivant est appelé « désactivant positif ».

Lorsqu'au contraire, on souhaite réaliser des pièces moulées dont la surface désactivée est au contact du moule, par exemple des éléments préfabriqués, le désactivant est appliqué en fond de moule, avant d'y couler le béton. Ainsi utilisé, l'agent désactivant est appelé « désactivant négatif ».

Au contact avec la surface du béton frais, le désactivant pénètre par diffusion sur une certaine profondeur et y induit un retard de prise. La profondeur de la couche retardée par le désactivant, aussi appelée capacité de creuse ou force d'attaque, sera choisie principalement en fonction de la taille des granulats présents. L'objectif étant de faire apparaître les granulats à la surface, la force d'attaque requise dépendra outre de l'effet esthétique recherché en particulier de la taille des granulats. Le désactivant présentera généralement une force d'attaque proportionnelle à la taille des granulats.

Après durcissement de la pièce, et le cas échéant démoulage, la couche de béton retardée en surface reste friable et peut être éliminée, de sorte à faire apparaître les granulats à la surface de la pièce, conférant un aspect esthétique particulier au matériau. La surface retardée peut être éliminée, après un délai de 8 à 24h environ, par lavage au jet d'eau sous haute pression ou par brossage.

### [Etat de la technique]

Les désactivants conventionnels à base de solvants pétroliers contiennent habituellement un agent filmogène, lequel sèche rapidement pour former un film homogène. En utilisation comme désactivant positif, donc appliqué sur la surface libre du béton moulé, ce film assure une bonne protection de la surface traitée vis-à-vis de la chaleur, du vent et de la pluie et permet une production à l'extérieur quelles que soient les conditions climatiques. En utilisation comme désactivant négatif, le séchage en film permet l'accès aisé des opérateurs au fond du moule aux fins de préparer la mise en place du béton frais.

Ces désactivants solvantés sont très appréciés en raison de leur très court temps de séchage, paramètre clé de la productivité. Cependant, on cherche à limiter l'usage des solvants pétroliers en raison de leur nocivité tant pour l'utilisateur que pour l'environnement. Par ailleurs, l'avantage du séchage rapide est contrebalancé par la nécessité de nettoyer après démoulage le moule encrassé par une couche de désactivant et de poussière de béton, ce qui requiert un temps considérable, et engendre donc une perte de productivité.

Afin de limiter l'usage de solvants, des formulations désactivantes en phase aqueuse voire huileuse ont été mises au point.

La demande de brevet EP 1 887 053 décrit ainsi une composition retardatrice non solvantée de type hot-melt. La composition est chauffée au-dessus de son point de fusion avant application puis forme une membrane solidifiée en refroidissant. Cette technologie est coûteuse puisqu'elle requiert l'acquisition d'un équipement spécifique pour la manipulation de la formulation à chaud et engendre des coûts énergétiques importants. Elle ne permet par ailleurs pas d'éviter la baisse de productivité due au nettoyage du moule.

Afin de faciliter le démoulage, il est connu d'enduire les moules de pièces préfabriquées avec une composition dite de décoffrage ou de démoulage. Ces compositions, à base d'huile végétale ou animale, permettent de diminuer l'adhérence du béton au coffrage. Cependant, l'application subséquente d'un désactivant par-dessus une telle composition de décoffrage ne permet pas l'obtention de résultats homogènes, car les compositions de décoffrage sont liquides et se mélangent donc partiellement avec le désactivant. Par ailleurs, on n'obtient pas un film sec. Cette solution ne constitue donc pas une solution satisfaisante.

Par ailleurs, la demande de brevet EP 1 526 120 fait état d'une composition retardatrice dans laquelle le retardateur de prise est dispersé ou dissous dans une huile végétale et/ou animale. Toutefois, ces compositions ne forment pas de film sec. Ce type de composition ne peut donc pas être utilisé de manière performante en désactivation négative.

En vue de pallier le problème de nettoyage, les moules peuvent être enduits avant application du désactivant d'une pré-couche filmogène solvantée. Cette pré-couche facilite le démoulage, mais doit être elle-même éliminée afin de restaurer l'aspect initial du moule. Cette solution reste par ailleurs insatisfaisante en termes de productivité puisqu'elle implique l'emploi successif de deux produits différents, dont un solvanté.

Par ailleurs, on connaît de la demande de brevet EP 2 360 132 une formulation retardatrice sous forme d'émulsion cationique comprenant en association un retardateur de prise, un surfactant cationique ainsi qu'un polymère acrylique et/ou une cire paraffinique. Ces compositions nécessitent un temps de séchage important pour une utilisation en tant que désactivant négatif. De plus, le moule, avec l'utilisation de ces compositions, reste largement encrassé de résidus de béton et de désactivant.

Enfin, le document DE202010015781 propose afin de réduire le temps de nettoyage des moules d'associer dans une préparation liquide un désactivant de surface et un agent de séparation filmogène. Le film de désactivant formé par application de la préparation sur le moule est dit adhérer au béton durci, de sorte qu'il peut être retiré avec la pièce du moule sans laisser de résidus. Ce document ne révèle toutefois aucun exemple d'une telle préparation ou d'un tel agent de séparation filmogène. Par ailleurs, ces préparations présentent des limites en termes de temps de séchage sans solvant pétrolier et de facilité de démoulage.

### [Problème technique]

Il existe donc un besoin de disposer d'une composition désactivante, notamment dépourvue de solvant pétrolier, facilitant le démoulage des pièces tout en limitant l'encrassement du moule et permettant d'assurer une productivité élevée.

L'objectif de la présente invention était donc de proposer une composition désactivante, de préférence dépourvue de solvant pétrolier, permettant de pallier les inconvénients de l'état de la technique évoqués et en particulier permettant de limiter le temps nécessaire pour le séchage et pour le nettoyage des moules.

Un autre objectif était de proposer une telle composition permettant d'atteindre une performance comparable à celle d'un désactivant solvanté en termes de vitesse de séchage et performance de désactivation tout en facilitant le démoulage et en limitant l'encrassement du moule par des résidus de désactivant, et de béton, notamment.

Un autre objectif encore était de proposer une telle composition qui présente un temps de séchage de moins de 30 minutes.

Un autre objectif encore était de proposer une telle composition qui soit stable au stockage.

Selon la conception la plus générale de l'invention, cet objectif est atteint par l'association d'au moins un retardateur de prise, d'une huile, d'au moins un agent filmogène hydrosoluble et d'un latex.

En effet, la composition selon l'invention assure la double fonction d'agent de désactivation de surface et d'agent de démoulage. Elle forme par ailleurs rapidement un film cohésif, sec et résistant tout en limitant le poussiérage et l'encrassement des moules, facilitant ainsi leur nettoyage. L'ensemble de ces facteurs contribue à un gain de temps précieux, qui permet d'augmenter la productivité, notamment de pièces préfabriquées.

### [Brève description de l'invention]

Aussi, selon un premier aspect, l'invention vise une dispersion ou émulsion aqueuse stable au stockage comprenant:
- au moins un retardateur de prise ;
- au moins un agent filmogène hydrosoluble;
- une huile ; et
- un latex non alcalisoluble.

De préférence, la composition de l'invention est une dispersion ou une émulsion stable au stockage, par exemple stable au stockage sur une durée d'au moins 4 mois, de préférence d'au moins 6 mois.

Le retardateur de prise peut être un retardateur de prise hydrosoluble ou liposoluble ou un mélange de ces retardateurs. Le retardateur de prise hydrosoluble peut être choisi parmi les acides carboxyliques et leurs sels ou dérivés ; les hydrates de carbone, notamment les sucres, et leurs sels ou dérivés, l'acide lignosulfonique, les acides phosphoniques et leurs sels ou dérivés ou les acides inorganiques comme l'acide phosphorique, leurs sels ou dérivés, ou un de leurs mélanges. En particulier, le retardateur de prise hydrosoluble peut être choisi parmi le glucose, le fructose, le saccharose, le méritose, le lactose, le maltotriose, le dextrose, le maltose, le galactose, le mannose, le glycogène ou l'un de leurs mélanges ou encore parmi l'acide citrique, l'acide tartrique, l'acide malique, l'acide gluconique, l'acide maléique, l'acide lactique et leurs sels ou l'un de leurs mélanges.

Le retardateur de prise liposoluble peut être choisi parmi les esters alkyliques d'acides hydroxycarboxyliques.

L'agent filmogène hydrosoluble peut être choisi en particulier parmi l'alcool polyvinylique, la polyvinylpyrrolidone ou les polysaccharides. L'alcool polyvinylique peut être choisi notamment avec un degré d'hydrolyse compris entre 50% et 99%, et la masse molaire moyenne comprise entre 10 000 et 100 000 g/mol.

L'huile contenue dans la composition peut comprendre un mélange de corps gras d'origine minérale, synthétique animale et/ou végétale.

Le latex contenu dans la composition peut être un latex acrylique ou méthacrylique, un copolymère styrène acrylique, un copolymère styrène butadiène, un copolymère ester acrylique - ester vinylique, un copolymère acétate de vinyle - versatate de vinyle ou un copolymère acétate de vinyle - éthylène.

Selon un second aspect, l'invention vise un procédé de préparation d'une composition selon l'invention, comprenant les étapes de :
(1) préparation d'une phase aqueuse comprenant le cas échéant un retardateur de prise hydrosoluble ;
(2) introduction et dissolution, notamment par chauffage, de préférence à une température minimale de 80°C, d'un agent filmogène hydrosoluble ;
(3) introduction d'une huile comprenant le cas échéant au moins un retardateur de prise liposoluble ;
(4) introduction du latex et des autres additifs éventuels ; et
(5) agitation pour former une dispersion ou une émulsion.

Selon un troisième aspect, l'invention vise un procédé de fabrication de pièces préfabriquées désactivées à partir d'une composition à base de liant hydraulique, notamment d'un béton, comprenant les étapes de :
(i) enduction d'un moule avec une composition selon l'invention ;
(ii) introduction de la composition à base de liant hydraulique fraîche, notamment d'un mortier ou béton, dans le moule ainsi enduit, le cas échéant après séchage du revêtement formé ;
(iii) retrait de la pièce moulée durcie du moule ; et
(iv) élimination de la pellicule désactivée de la surface de la pièce moulée.

Selon un quatrième aspect, l'invention vise l'utilisation de la composition selon l'invention pour la désactivation négative d'une pièce en matériau à base de liant hydraulique, ainsi que pour faciliter le démoulage de ladite pièce.

Dans le cadre de cet exposé, on entend par le terme « retardateur de prise » désigner un composé ayant pour effet de retarder la prise de compositions à base de liant hydraulique, c'est-à-dire de retarder ou inhiber les phénomènes liés à cette prise tels que les phénomènes d'hydratation, induisant de ce fait un durcissement plus tardif de la composition. De manière générale, un retardateur de prise retarde le temps de prise d'une composition à base de liant hydraulique dans laquelle il a été introduit à un dosage d'au plus 5% en poids sec par rapport au poids dudit liant hydraulique, le temps de prise étant mesuré selon le test EN480-2. De préférence, le temps de prise est retardé d'au moins 30 minutes par rapport à une composition à base de liant hydraulique témoin.

On entend par le terme « agent filmogène» désigner des composés susceptibles de former, par séchage, un film cohésif et continu sur la surface sur laquelle ils ont été appliqués.

On entend par composé « hydrosoluble » désigner un composé dont la solubilité dans l'eau à 20°C est supérieure ou égale à 5g/L, de préférence supérieure ou égale à 50g/L.

On entend par le terme « huile » désigner une composition comprenant un ou plusieurs corps gras. Typiquement, l'huile est liquide à température ambiante (20°C) c'est-à-dire qu'elle présente un point de fusion inférieur à 40°C, de préférence inférieur à 30°C. De façon préférée, l'huile est une huile de démoulage comprenant le cas échéant les additifs habituels.

On entend par le terme « latex » désigner une dispersion aqueuse de polymère synthétique, ou naturel, non soluble dans l'eau, comprenant éventuellement les additifs habituels tels que des surfactants.

Des polymères alcalisolubles sont des polymères qui se trouvent à l'état dispersé dans une solution à faible pH et qui se solubilisent à partir d'un certain seuil de pH, généralement à un pH supérieur à 5, de préférence à un pH de 6 à 8. Ainsi, on entend par le terme « non alcalisoluble » viser des produits qui sont à l'état dispersé dans une solution de pH supérieur à 5, de préférence à un pH supérieur à 8.

On entend par le terme « liant hydraulique » désigner tout composé ayant la propriété de s'hydrater en présence d'eau et dont l'hydratation permet d'obtenir un solide ayant des caractéristiques mécaniques. Le liant hydraulique peut être un ciment selon la norme EN 197-1. La composition à base de liant hydraulique est par exemple un béton. Par le terme béton, on entend un mélange de liants hydrauliques, de granulats, d'eau, éventuellement d'additifs, et éventuellement d'additions minérales. Dans le cadre de l'invention, le terme béton comprend les mortiers.

L'expression additions minérales désigne les laitiers (tels que définis dans la norme Ciment NF EN 197-1 paragraphe 5.2.2), les laitiers d'aciérie, les matériaux pouzzolaniques (tels que définis dans la norme Ciment NF EN 197-1 paragraphe 5.2.3), les cendres volantes (telles que définies dans la norme Ciment NF EN 197-1 paragraphe 5.2.4), les schistes calcinés (tels que définis dans la norme Ciment NF EN 197-1 paragraphe 5.2.5), les calcaires (tels que définis dans la norme Ciment NF EN 197-1 paragraphe 5.2.6) ou encore les fumées de silices (telles que définies dans la norme Ciment NF EN 197-1 paragraphe 5.2.7) ou leurs mélanges. D'autres ajouts, non actuellement reconnus par la norme Ciment NF EN 197-1 (2001), peuvent aussi être utilisés. Il s'agit notamment des métakaolins, tels que les métakaolins de type A conformes à la norme NF P 18-513, et des additions siliceuses, telles que les additions siliceuses de minéralogie Qz conformes à la norme NF P 18-509.

Par l'expression ciment on entend selon l'invention un ciment de type CEM I, CEM II, CEM III, CEM IV ou CEM V selon la norme Ciment NF EN 197-1.

On entend par le terme « frais » qualifier de telles compositions à base de liant hydraulique lorsqu'elles ont été gâchées avec de l'eau, mais n'ont pas encore durci.

On entend par « solvant oxygéné » décrire des solvants comprenant un ou plusieurs atomes d'oxygène dans leur structure moléculaire en plus d'atomes de carbone et d'hydrogène. Ils sont notamment choisis parmi les alcools, par exemple l'éthanol, l'isopropanol ; les cétones, par exemple l'acétone ; les esters, par exemple l'acétate d'éthyle ; les éthers, par exemple le tétrahydrofurane ; les éthers de glycol, par exemple le 2-butoxyéthanol. De préférence le solvant oxygéné est un alcool, de préférence l'isopropanol.

### [Description détaillée de l'invention]

La composition selon l'invention comporte tout d'abord un ou plusieurs retardateurs de prise. Le retardateur de prise a pour fonction d'assurer la désactivation en surface de la composition à base de liant hydraulique, notamment du béton. Le retardateur peut être hydrosoluble, c'est-à-dire présenter une solubilité dans l'eau à 20°C est supérieure ou égale à 5g/L, de préférence supérieure ou égale à 50g/L. En variante, le retardateur peut être liposoluble, c'est-à-dire présenter une solubilité dans un corps gras tel qu'une huile de colza, à 20°C, est supérieure ou égale à 5g/L, de préférence supérieure ou égale à 50g/L. La composition selon l'invention peut aussi comprendre un mélange de ces deux types de retardateur.

De façon particulièrement préférée, le retardateur de prise est hydrosoluble.

Le retardateur de prise hydrosoluble peut être choisi parmi les composés connus à cet effet, comme les acides carboxyliques, leurs sels et dérivés ; les hydrates de carbone, notamment les sucres, leurs sels et dérivés ; mais aussi l'acide lignosulfonique, les acides phosphoniques, en particulier ceux portant des groupements amino ou hydroxy, leurs sels et dérivés ; ou les acides inorganiques comme l'acide phosphorique, leurs sels et dérivés.

Dans le cadre de la présente invention, les dérivés d'acides carboxyliques, d'hydrates de carbone, d'acides lignosulfoniques, d'acides phosphoniques, en particulier ceux portant des groupements amino ou hydroxy, et d'acides inorganiques, incluent également les sels de ces dérivés.

Dans le cadre de la composition selon l'invention, le retardateur de prise hydrosoluble est de préférence choisi parmi les acides carboxyliques, leurs sels et dérivés ; les sucres, leurs sels et dérivés ; ou un de leurs mélanges.

Parmi les sucres, le retardateur de prise peut être choisi en particulier parmi le glucose, le fructose, le saccharose, le méritose, le lactose, le maltotriose, le dextrose, le maltose, le galactose, le mannose, le glycogène ou l'un de leurs mélanges.

Parmi les acides carboxyliques, on peut mentionner en particulier les acides hydroxycarboxyliques et parmi ceux-ci notamment l'acide citrique, l'acide tartrique, l'acide malique, l'acide gluconique, l'acide maléique et l'acide lactique, leurs sels ou l'un de leurs mélanges.

Parmi les sels d'acide carboxylique, on peut citer les sels de sodium ou les sels de potassium. A titre d'exemple particulier, on peut citer le citrate de sodium, le tartrate de sodium ou le gluconate de sodium.

On entend par les dérivés d'acides carboxyliques notamment désigner leurs esters, à titre d'exemple particulier on peut citer l'acétate d'éthyle.

Lorsqu'il s'agit d'acides hydroxycarboxyliques, les dérivés incluent les lactones.

Le retardateur de prise liposoluble peut être choisi parmi les composés connus à cet effet, comme ceux divulgués dans EP 2 935 140, notamment les esters alkyliques d'acides hydroxycarboxyliques solubles dans les huiles/solvants ou dispersibles dans les huiles/solvants. Il s'agit par exemple d'un ester alkylique d'acide citrique tel que le citrate de triéthyle.

La composition selon l'invention comprend de préférence 0,1 à 25%, en particulier 0,5 à 15% en poids de retardateur de prise.

Dans la suite de la description et sauf indication contraire, les pourcentages sont exprimés par rapport au poids total de la composition.

La composition selon l'invention comporte par ailleurs au moins un agent filmogène hydrosoluble.

Cet ingrédient assure la formation d'un film sur le moule enduit de composition selon l'invention.

Ce film est cependant dissous au contact de la phase interstitielle, qui désigne la phase aqueuse située entre les grains de la composition à base de liant hydraulique en raison du caractère hydrosoluble de l'agent filmogène. Grâce à la dissolution du film formé, le retardateur contenu dans le film est introduit dans la composition de liant hydraulique, laissant l'huile au contact avec la surface de ladite composition, où elle peut jouer pleinement son rôle d'agent facilitant le démoulage. Le cas échéant, lorsque l'huile comprend un agent retardateur de prise, celui-ci diffuse à la surface de la composition de liant hydraulique, l'huile joue alors un rôle d'agent facilitant le démoulage et un rôle de véhicule de l'agent retardateur de prise.

Les propriétés spécifiques de l'agent filmogène en association avec l'huile de démoulage permettent donc à la composition selon l'invention d'assurer la fonction 2 en 1 de la composition selon l'invention, à savoir la désactivation et le démoulage.

La dissolution du film formé a également pour conséquence une réduction voire l'absence de résidu de film, aussi bien sur le béton que sur le moule. Les opérations de nettoyage s'en trouvent facilitées et la quantité de déchets est réduite.

Il existe différents agents filmogènes hydrosolubles comme par exemple l'alcool polyvinylique, le polyvinylpyrolidone ou encore des polysaccharides, par exemple l'amidon ou les gommes telles que la gomme xanthane.

L'agent filmogène hydrosoluble est de préférence choisi parmi l'alcool polyvinylique et le polyvinylpyrrolidone. L'alcool polyvinylique est de préférence choisi avec un degré d'hydrolyse compris entre 50% et 99%, de préférence entre 70% et 85%. La masse molaire moyenne de l'alcool polyvinylique est de préférence comprise entre 10 000 et 100 000, et en particulier entre 25 000 et 75 000 g/mol.

La composition selon l'invention comprend de préférence 1 à 50%, de préférence 5 à 25% en poids d'agent filmogène.

La composition selon l'invention contient en outre une huile afin notamment de faciliter le démoulage et réduire le poussiérage et l'encrassement du moule. L'huile contribue par ailleurs à réduire les points d'accroché du béton au moule et, le cas échéant, l'huile peut contribuer à la désactivation en véhiculant un agent retardateur de prise liposoluble.

L'huile peut comprendre un ou plusieurs corps gras d'origine minérale, synthétique, animale et/ou végétale. De préférence, le ou les corps gras sont liquides à température ambiante (20°C) c'est-à-dire qu'ils présentent un point de fusion inférieur à 40°C, de préférence inférieur à 30°C. Il peut s'agir notamment d'une composition du commerce telle que l'huile de démoulage Dem Oleo 50 commercialisée par la société CHRYSO ou d'un agent de démoulage « pur synthèse » selon la classification SYNAD (Syndicat National des adjuvants pour bétons et mortiers) 2010 des agents de démoulage (l'huile dite « pur synthèse » est définie selon les critères suivants : solvants désaromatisés, point éclair > 61 °C, aromatiques totaux < 1% et couleur Gardner 5 maximum).

La phase huileuse peut comporter des matières grasses d'origines végétales, animales ou minérales, qui peuvent être liquides à température ambiante ou non. Toutefois, lorsqu'elles ne sont pas liquides à température ambiante, la composition de l'invention est préparée de préférence à chaud.

L'huile végétale peut notamment être choisie parmi l'huile de colza, l'huile de palme, l'huile de coprah, l'huile de ricin, l'huile d'arachide, l'huile de pépin de raisin, l'huile de maïs, l'huile de canola, l'huile de lin, l'huile de noix de coco, l'huile de soja, l'huile de tournesol et leurs mélanges.

L'huile animale peut être choisie en particulier parmi le suif, la suintine, l'huile de lard, l'huile de hareng, l'huile de foie de morue, l'huile de sardine, l'huile de poisson et l'huile de lanoline et leurs mélanges.

L'huile minérale peut notamment être une huile aliphatique, paraffinique ou naphténique, y compris en particulier les fractions comportant en moyenne 8 à 30 atomes de carbone, de préférence 11 à 25 atomes de carbone, seules ou en mélange, notamment l'huile minérale claire. Les huiles privilégiées sont les huiles minérales CₙH₂ₙ₊₂, avec n compris entre 8 et 19.

L'huile peut être introduite dans la composition selon l'invention sous forme d'une huile entière ou d'une émulsion, par exemple émulsion huile dans eau ou émulsion inverse eau dans huile.

La composition selon l'invention comprend de préférence 1 à 40%, de préférence 5 à 25% en poids d'huile.

La composition selon l'invention comporte également un latex. Le latex a des qualités filmogènes et apporte par ailleurs de la matière à la composition et au film formé. Il contribue par ailleurs par son élasticité à conférer la résistance requise au film formé. Par ailleurs, il a été observé que sa présence a un effet favorable sur le temps de séchage.

Le latex choisi est non alcalisoluble. Une grande variété de ce type de latex est disponible sur le marché. De préférence, on choisira un latex à base de monomères acryliques, méthacryliques, styréniques, ou vinyliques, notamment dérivé de copolymères choisis parmi les copolymères styrène acrylique, styrène butadiène, ester acrylique - ester vinylique, acétate de vinyle - versatate de vinyle ou acétate de vinyle - éthylène.

Le latex présente de préférence une teneur en matières solides comprise entre 10 et 90% en poids dispersé dans un solvant aqueux, généralement l'eau. Il peut éventuellement contenir d'autres composés comme par exemple des surfactants lorsqu'il a été obtenu par polymérisation en émulsion.

La composition selon l'invention comprend avantageusement 0,5 à 20%, de préférence 2 à 10% en poids de matière sèche de latex non alcalisoluble.

En dehors des ingrédients évoqués, la composition selon l'invention peut éventuellement contenir des additifs permettant d'améliorer ses propriétés et/ou celles du film formé tels que des charges, des agents anti-mousse, des agents biocides, des agents épaississants, des pigments, des agents mouillants, des plastifiants ou des dispersants.

En particulier, on peut ajouter des agents appropriés afin de régler les propriétés rhéologiques de la composition selon l'invention de sorte à permettre une application aisée par pulvérisation.

De préférence, ces agents sont présents dans la composition à des teneurs n'excédant pas 15% en poids, et de préférence n'excédant pas 10% en poids.

La composition aqueuse selon l'invention est de préférence dépourvue de solvants pétroliers. Avantageusement, elle comporte à titre de solvants majoritairement voire exclusivement de l'eau et éventuellement des solvants oxygénés hydrosolubles.

La teneur en solvants dépendra généralement de l'application envisagée, puisqu'elle permet de faire varier la viscosité. Mais le plus souvent, la composition comprendra au total, donc y compris la quantité de solvant apporté par le latex, une teneur en solvants comprise entre 10 et 70, de préférence entre 20 et 60% et tout particulièrement entre 35 et 60% en poids par rapport au poids final.

La composition selon l'invention se présente généralement sous forme d'une composition bi- ou multiphasique, notamment d'une dispersion ou émulsion.

Après application de la composition selon l'invention, il se forme rapidement un film sec et résistant, notamment à la coulée de la composition à base de liant hydraulique et même au passage éventuel de techniciens.

Lors de la coulée de la composition à base de liant hydraulique, l'agent filmogène hydrosoluble est dissous au contact de la phase interstitielle, libérant le retardateur hydrosoluble qui va diffuser à la surface de la composition à base de liant hydraulique. L'huile, quant à elle, se place avantageusement à l'interface moule/composition à base de liant hydraulique permettant au retardateur liposoluble éventuel de diffuser à la surface de ladite composition tout en assurant la facilité de démoulage. La décomposition du film formé au contact de la composition à base de liant hydraulique permet en une seule opération d'obtenir l'effet désactivant tout en facilitant le démoulage.

Selon un deuxième aspect, l'invention vise un procédé de préparation de la composition décrite ci-dessus, comprenant les étapes de :
(1) préparation d'une phase aqueuse comprenant le cas échéant un retardateur de prise hydrosoluble ;
(2) introduction et dissolution, notamment par chauffage, de préférence à une température minimale de 80°C, d'un agent filmogène hydrosoluble;
(3) introduction d'une huile, comprenant le cas échéant au moins un retardateur de prise liposoluble ;
(4) introduction du latex et des autres additifs éventuels ; et
(5) agitation pour former une dispersion ou une émulsion.

Selon un troisième aspect, l'invention concerne un procédé de fabrication de pièces préfabriquées désactivées à partir d'une composition à base de liant hydraulique, par exemple un béton ou mortier, comprenant les étapes de :
(i) enduction d'un moule avec une composition aqueuse selon l'invention décrite ci-dessus ;
(ii) introduction de la composition à base de liant hydraulique fraiche, notamment d'un mortier ou béton, dans le moule ainsi enduit, le cas échéant après séchage du revêtement formé ;
(iii) retrait de la pièce moulée durcie du moule ; et
(iv) élimination de la pellicule désactivée de la surface de la pièce moulée.

L'étape (i) d'enduction est de préférence réalisée au rouleau ou à la brosse. Elle peut néanmoins également être réalisée par pulvérisation ou par tout autre moyen habituel.

Le dosage requis pour une bonne efficacité de la composition correspond généralement à celui nécessaire pour l'obtention d'un film continu sur la surface du moule. En général, il a été constaté qu'il est comparable à celui des compositions conventionnelles à viscosité équivalente. De préférence, la viscosité de la composition est ajustée de manière à permettre l'obtention d'un film continu avec un dosage de 40 g/m² à 120 g/m², de préférence de 45 à 110 g/m².

L'étape (ii) d'introduction de la composition à base de liant hydraulique préalablement gâchée avec l'eau peut être réalisée de manière classique. Le plus souvent, on préfèrera attendre que la composition selon l'invention forme un film sec sur les parois du moule. En effet, cela permet aux techniciens d'accéder au besoin au fond du moule pour suivre l'introduction et procéder à un talochage si nécessaire sans abimer le film formé.

L'étape (iii) du démoulage de la pièce durcie peut être réalisée de manière conventionnelle. On constate que l'application de la composition selon l'invention permet de faciliter notablement cette opération comparé à un désactivant classique. La facilité de démoulage améliorée a été mise en évidence par un test mesurant l'angle de démoulage décrit plus loin.

Par ailleurs, contrairement aux désactivants classiques, le film formé par la composition de l'invention se dissout totalement dans la composition à base de liant hydraulique, ne laissant aucun résidu dans le fond du moule ni sur le béton, pas même un film. Il a de plus été montré que le dépôt de poussières et l'accroche de la composition de liant hydraulique sur le moule étaient grandement réduits par l'utilisation de la composition selon l'invention comme le montrent les figures comparatives 1 et 2.

Enfin, l'étape (iv) du procédé de désactivation consiste à éliminer de la surface traitée la composition à base de liant hydraulique retardée, non durcie. Cette étape, dite étape de lavage, peut également être réalisée de manière conventionnelle, notamment par jet d'eau sous pression ou par brossage.

La composition selon l'invention permet en particulier d'associer deux fonctions, à savoir celle de désactiver une surface de composition à base de liant hydraulique et celle de faciliter le démoulage. Ainsi, la composition selon l'invention est un produit 2 en 1. Cette technologie hybride est particulièrement utile pour la désactivation négative, dans laquelle elle est appliquée sur les parois du moule. De plus, la composition selon l'invention permet de façon avantageuse de limiter les opérations de nettoyage du moule et/ou du béton et la quantité de déchets produits puisque le film est dissous.

Aussi, selon un quatrième aspect, l'invention concerne l'utilisation de la composition décrite pour la désactivation négative d'une pièce en matériau à base de liant hydraulique.

Selon un cinquième aspect, l'invention concerne de manière plus générale l'utilisation de la composition selon l'invention pour la désactivation négative d'une pièce en matériau à base de liant hydraulique tout en facilitant le démoulage de ladite pièce.

L'invention sera mieux comprise au regard des exemples qui vont suivre, donnés à titre non limitatif, ainsi que des figures en annexe, qui montrent :
FIG. 1 : un cliché illustrant l'état d'un moule enduit de la composition de l'invention après démoulage de la pièce de béton préfabriqué ;
FIG. 2 : un cliché illustrant l'état d'un moule enduit d'un désactivant négatif conventionnel après démoulage de la pièce de béton préfabriqué ;
FIG. 3 : un cliché illustrant l'aspect d'une dalle de béton moulée obtenue par désactivation négative avec la composition selon l'invention ; et
FIG. 4 : un schéma explicatif de la mesure de l'angle de démoulage ;
FIG. 5 : un cliché illustrant l'état d'un moule enduit de la composition de l'invention après démoulage de la pièce de béton préfabriqué ;
FIG. 6 : un cliché illustrant l'état d'un moule enduit d'une composition comparative exempte d'huile et de latex non hydrosoluble.

### [Exemples]

### EXEMPLE 1

Dans un récipient équipé de moyens de chauffage et d'agitation mécanique adaptés, on introduit sous agitation 383 parties d'eau de ville, 50 parties de saccharose (Groupe Vermandoise) et 50 parties d'urée (Quaron).

Le mélange obtenu est chauffé à 80°C, puis on introduit 150 parties d'alcool polyvinylique à 86-89% d'hydrolyse (3 à 4 cps pour une solution à 4% en poids).

Lorsque la solution est limpide suite à la dissolution complète de l'alcool polyvinylique, on arrête le chauffage et on introduit sous forte agitation mécanique 2 parties de Surfynol DF 58 (huile silicone d'Air Product Chemicals), 2 parties de biocide Nuosept BM22 (mélange de 1,2-benzisothiazole-3(2H)-one et de 2-méthyl-2H-isothiazole-3-one d'ISP Biochema Schwaben GmbH), 3 parties de dispersant Chryso®Fluid Optima 100 commercialisé par CHRYSO, 50 parties de TiO₂, 150 parties de Chryso®Dem Oleo 50 (ou Chryso®DEM DPS Oleo 50) commercialisée par CHRYSO, 10 parties de dioctylsulfosuccinate de sodium et 150 parties de latex acrylique à 40% en poids sec de latex.

On obtient une composition prête à l'emploi.

Le tableau 1 ci-dessous rappelle les ingrédients de la composition et en donne le pourcentage massique pour cet exemple.

**Tableau 1 : Composition de l'exemple 1**

| **Composantes** | **Quantité [% en poids]** |
|---|---|
| Saccharose | 5.0 |
| Polyvinylalcool à 86-89% d'hydrolyse | 15.0 |
| Mélange de corps gras Oleo 50 | 15.0 |
| Latex acrylique | 15.0 |
| Urée | 5.0 |
| Huile silicone Surfynol DF 58 | 0.2 |
| Biocide Nuosept BM 22 | 0.2 |
| Optima 100 | 0.3 |
| Dioxyde de titane | 5 |
| Dioctylsulfosuccinate de sodium | 1 |
| Eau | 38.3 |
| TOTAL | 100.0 |

### (a) Propriétés d'application

L'intérêt de la composition selon l'invention à titre de composition retardatrice de prise et facilitant le démoulage a été vérifié par des essais décrits ci-dessous.

Un moule carré pour pièce de béton préfabriqué (acier, dimension 40*40 cm) a été enduit au rouleau de la composition de l'exemple 1 au dosage de 90 g/m². La composition forme au bout de 30 mn à 20°C un film sec, continu et résistant au passage d'une personne.

Après la prise du béton frais, on procède au décoffrage de la pièce moulée et on élimine la surface désactivée de la pièce moulée par jet d'eau à haute pression.

On constate tout d'abord que la pièce se démoule particulièrement facilement.

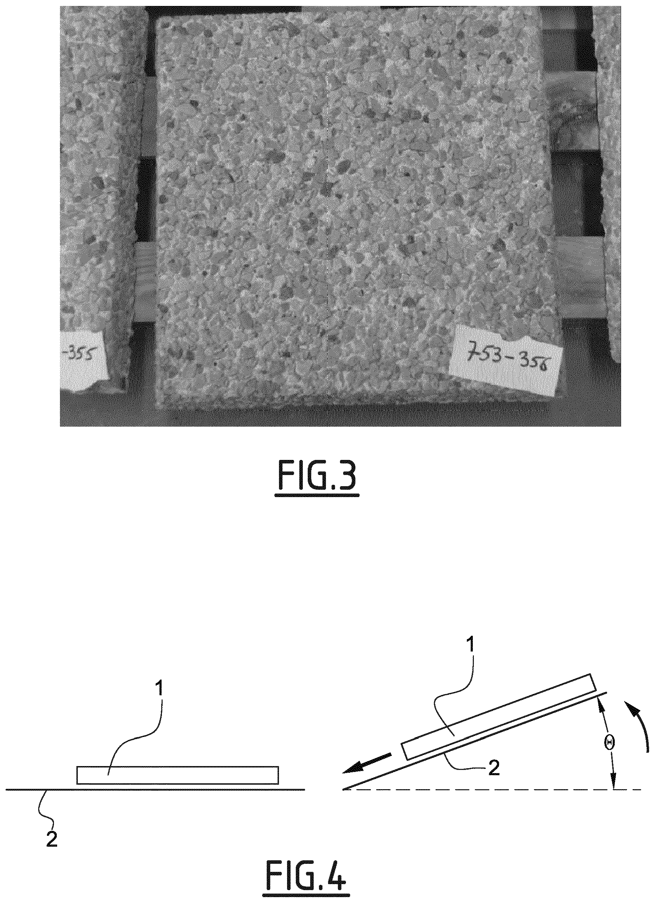

Afin de caractériser la facilité de démoulage, on procède à un test dont le schéma est illustré à la figure 4. Tout d'abord, on applique la composition de l'invention ou la composition de désactivant classique sur une plaque acier (2) au même dosage que décrit précédemment. On applique sur la plaque (2) ainsi enduite (après séchage) un moule circulaire sans fond, dans lequel on coule la composition à base de liant hydraulique, par exemple béton, afin de former une dalle (1). Le lendemain, après la prise de la composition à base de liant hydraulique, on soulève la plaque (2) d'un côté, l'autre côté servant de pivot. Du fait de la présence d'un désactivant classique, la dalle (1) est en quelque sorte « collée » au moule. Au fur et à mesure que l'on soulève la plaque (2), la force due à la gravité devient de plus en plus importante par rapport à la force d'adhésion de la composition à base de liant hydraulique, notamment béton, sur le moule, et la plaque (1) finit par glisser vers l'arête pivot. On repère l'angle θ par rapport à l'horizontale pour lequel la plaque s'est décollée et a glissé (voir Fig. 4). Cet angle est d'autant plus faible que l'adhésion de la composition à base de liant hydraulique, par exemple béton, sur la plaque est faible. Donc plus l'angle θ est faible, plus la composition présente de bonnes propriétés de démoulage.

On constate également que la composition selon l'exemple 1 remplit parfaitement son rôle de désactivant et permet d'obtenir un aspect esthétique de la surface désactivée conforme aux attentes (figure 3).

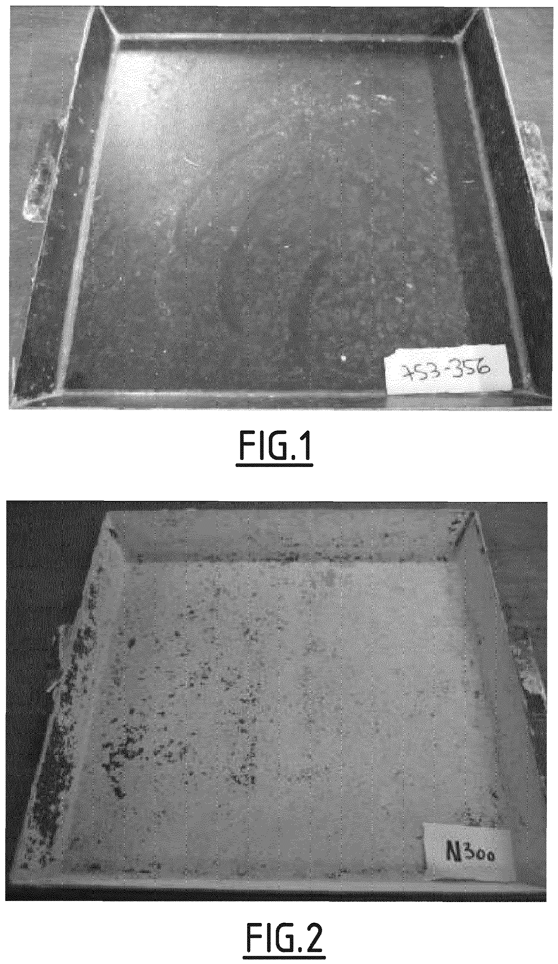

On constate en outre une nette amélioration de l'aspect de surface du moule (figure 1) comparé à une composition de désactivation conventionnelle (figure 2), par exemple à base de résine solubilisée dans une coupe pétrolière, des retardateurs et des charges minérales dispersés dans ce mélange, avec une forte réduction du poussiérage et un encrassement quasiment absent.

Par ailleurs, la composition préserve la qualité du moule en évitant la formation de points d'accroché du béton.

Le tableau 2 ci-dessous résume les observations des propriétés de la composition selon l'exemple 1, en comparaison avec une composition désactivante conventionnelle.

**Tableau 2 : Propriétés de la composition selon l'invention**

| | Exemple 1 | Composition désactivante conventionnelle |
|---|---|---|
| Facilité d'application | Application aisée (+) | Application aisée (+) |
| Temps de séchage | Rapide (+) | Très rapide (++) |
| Effet désactivant | Très satisfaisant (++) | Très satisfaisant (++) |
| Facilité de démoulage par retournement de plaque | Très aisé (++) | Difficile (-) Quelques coups de marteau à l'arrière du moule sont nécessaires pour faire tomber la plaque |
| Angle de démoulage | Environ 50° | >90° |
| Poussiérage | Important (-) | Très important (--) |
| Encrassement, restes de béton, points d'accroché | Quasiment absent (++) (figure 1) | Très important (--) (figure 2) |
| Facilité de nettoyage du moule | Facile et rapide (++) possible au chiffon ou à la balayette | Long et fastidieux (--) Nécessite l'utilisation d'une raclette |
| Temps de lavage de la dalle | 30 secondes | 40 secondes |
| Facilité de lavage de la dalle | Très facile (++) | Facile (+) |

| | | |
|---|---|---|
| (Les notations signifient : ++ très bon, + bon, o correct, - moyen, -- mauvais) | | |

Les résultats présentés au tableau 2 ci-dessus montrent que la composition selon la présente invention permet de faciliter le démoulage et d'assurer la désactivation de compositions à base de liant hydraulique tout en limitant le poussiérage et l'encrassement en fond de moule. Les opérations de nettoyage et la quantité de déchets sont avantageusement réduites avec un temps de séchage proche de celui de compositions à base de solvants pétroliers, ce qui permet un gain notable en productivité.

### EXEMPLE 2

### Composition selon l'invention :

La composition selon l'invention est préparée selon le mode opératoire décrit ci-dessous.

Dans un récipient équipé de moyens de chauffage et d'agitation mécanique adaptés, on introduit sous agitation 416 parties d'eau de ville, 60 parties de saccharose (Groupe Vermandoise) et 25 parties de Gluconate de sodium (Roquette).

Le mélange obtenu est chauffé à 80°C, puis on introduit 75 parties d'alcool polyvinylique à 86-89% d'hydrolyse (3 à 4 cps pour une solution à 4% en poids).

Lorsque la solution est limpide suite à la dissolution complète de l'alcool polyvinylique, on arrête le chauffage et on introduit sous forte agitation mécanique 2 parties de Surfynol DF 58 (huile silicone d'Air Product Chemicals), 2 parties de biocide Acticide SR 2081 (mélange d'isothiazoles de THOR), 3 parties de dispersant Chryso®Fluid Optima 100 commercialisé par CHRYSO, 50 parties de TiO₂, 150 parties de Chryso®Dem DPS Oleo 50 commercialisée par CHRYSO, 15 parties de dioctylsulfosuccinate de sodium, 200 parties de latex acrylique à 40% en poids sec de latex, et enfin 2 parties de slurry noir.

On obtient une composition prête à l'emploi et qui, après avoir été laissée au repos (sans agitation) pendant au moins 4 mois, n'a pas déphasé. La composition obtenue est donc stable au stockage.

### Composition comparative (sans huile et sans latex non hydrosoluble) :

La composition servant d'exemple comparatif est préparée selon le mode opératoire décrit ci-dessous.

Dans un récipient équipé de moyens de chauffage et d'agitation mécanique adaptés, on introduit sous agitation 768 parties d'eau de ville, 60 parties de saccharose (Groupe Vermandoise) et 25 parties de Gluconate de sodium (Roquette).

Le mélange obtenu est chauffé à 80°C, puis on introduit 75 parties d'alcool polyvinylique à 86-89% d'hydrolyse (3 à 4 cps pour une solution à 4% en poids).

Lorsque la solution est limpide suite à la dissolution complète de l'alcool polyvinylique, on arrête le chauffage et on introduit sous forte agitation mécanique 2 parties de Surfynol DF 58 (huile silicone d'Air Product Chemicals), 2 parties de biocide Acticide SR 2081 (mélange d'isothiazoles de THOR), 3 parties de dispersant Chryso®Fluid Optima 100 commercialisé par CHRYSO, 50 parties de TiO₂, et 15 parties de dioctylsulfosuccinate de sodium.

On obtient une composition prête à l'emploi.

Le tableau 3 ci-dessous rappelle les ingrédients des compositions et donne le pourcentage massique pour ces exemples.

**Tableau 3 : Composition selon l'invention et composition d'exemple comparatif**

| **Composantes** | **Quantité [% en poids]** | |
|---|---|---|
| | composition selon l'invention | Composition comparative |
| Saccharose | 6.0 | 6 |
| Gluconate de sodium | 2.5 | 2.5 |
| Polyvinylalcool à 86-89% d'hydrolyse (polymère hydrosoluble) | 7.5 | 7.5 |
| Mélange de corps gras Oleo 50 *(huile)* | 15.0 | 0 |
| Latex acrylique *(latex non hydrosoluble)* | 20.0 | 0 |
| Huile silicone Surfynol DF 58 | 0.2 | 0.2 |
| Biocide Acticide SR 2081 | 0.2 | 0.2 |
| Optima 100 | 0.3 | 0.3 |
| Dioxyde de titane | 5 | 5 |
| Sulfosuccinate de sodium | 1.5 | 1.5 |
| Eau | 41.6 | 76.8 |
| Slurry noir | 0.2 | 0 |
| TOTAL | 100.0 | 100.0 |

L'intérêt de la composition selon l'invention à titre de composition retardatrice de prise et facilitant le démoulage a été vérifié par des essais décrits ci-dessous. Ces essais montrent que la composition de l'exemple comparatif (dépourvue d'huile et de latex non hydrosoluble) présente des performances de séchage et de démoulage inférieures à celles de la composition selon l'invention.

Pour chacune des deux compositions susmentionnées, un moule carré pour pièce de béton préfabriqué (acier, dimension 40*40 cm) a été enduit de la composition choisie avec un rouleau et au dosage d'environ 90 g/m². La composition forme à 20°C au bout d'un temps déterminé un film sec, continu et résistant au passage d'une personne. On remplit alors ces moules de béton préparé selon les méthodes connues de l'homme du métier et selon la composition ci-dessous :

| Constituants du béton | quantités |
|---|---|
| Ciment CEM I 52,5N Le Teil Super Blanc | 400 kg/m³ |
| Granulats 4/8 Palvadeau | 1500 kg/m³ |
| Sable 0/4 Bernières | 390 kg/m³ |
| CHRYSO ® Optima 206 | 0,45% du poids de ciment |
| Eau totale | 173 kg/m³ |

Après la prise du béton frais, on procède au décoffrage de la pièce moulée et on élimine la surface désactivée de la pièce moulée par jet d'eau à haute pression. On nettoie également le fond du moule avec une raclette, et l'on pèse à l'aide d'une balance la masse de poussière et résidus de béton.

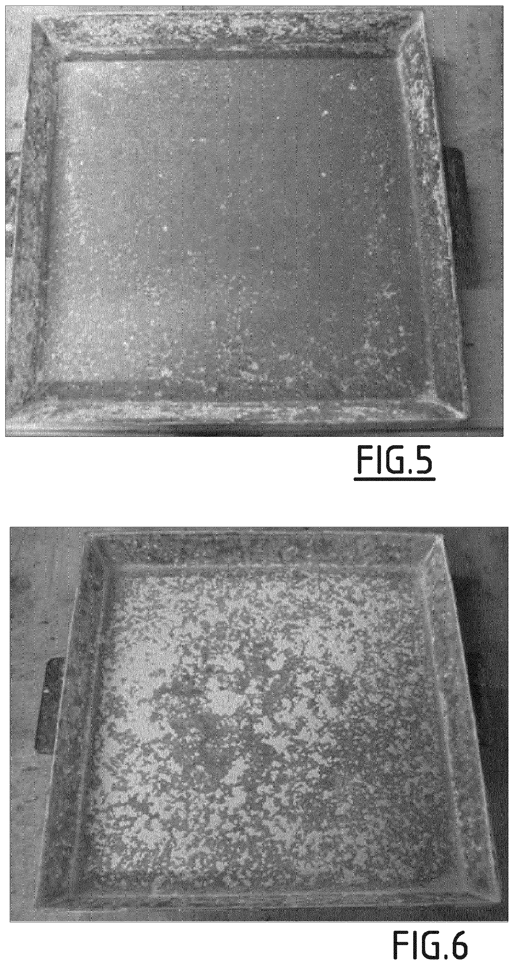

On constate tout d'abord que la pièce se démoule particulièrement facilement dans le cas de la composition selon l'invention, alors que le démoulage est très difficile dans le cas de la composition de l'exemple comparatif (sans huile et sans latex non hydrosoluble). On constate en outre que les résidus de béton sont peu importants dans le cas de la composition selon l'invention (figure 5), alors que le moule comporte beaucoup plus de poussière et résidus de béton dans le cas de la composition de l'exemple comparatif (figure 6).

Le tableau ci-dessous résume les observations des propriétés de la composition selon l'invention, et de la composition de l'exemple comparatif.

**Tableau 4 : Propriétés de la composition selon l'invention et de la composition de l'exemple comparatif**

| | **composition selon l'invention** | **Exemple comparatif (Sans huile et sans latex non hydrosoluble)** |
|---|---|---|
| Stabilité du produit | Stable sur plusieurs mois | |
| Facilité d'application | Application aisée (+) | Application moins aisée (+) car produit très liquide |
| Temps de séchage à 20°C | 50 mn (-) | 60 mn (--) |
| Effet désactivant | Très satisfaisant (++) | Très satisfaisant (++) |
| Facilité de démoulage par retournement de plaque | Très aisé (++) | Très difficile (--) Plusieurs coups de marteau à l'arrière du moule sont nécessaires pour faire tomber la dalle |
| Facilité de nettoyage du moule | Facile et rapide (++) possible au chiffon ou à la balayette | Long et fastidieux (--) Nécessite l'utilisation d'une raclette |
| Quantité de poussière récupérée dans le fond du moule (40*40 cm) | Environ 1g (++) (figure 5) | Environ 35 g (--) (figure 6) |
| Temps de lavage de la dalle | 30 secondes | 30 secondes |
| Facilité de lavage de la dalle | Très facile (++) | Très Facile (++) |

| | | |
|---|---|---|
| (Les notations signifient : ++ très bon, + bon, o correct, - moyen, -- mauvais) | | |

## Revendications

1. Dispersion ou émulsion aqueuse stable au stockage comprenant :
- au moins un retardateur de prise ;
- au moins un agent filmogène hydrosoluble;
- une huile ; et
- un latex non alcalisoluble.

2. Composition selon la revendication 1, dans laquelle le retardateur de prise est un retardateur de prise hydrosoluble ou liposoluble ou un mélange de ces retardateurs.

3. Composition selon la revendication 2, dans laquelle le retardateur de prise hydrosoluble est choisi parmi les acides carboxyliques et leurs sels ou dérivés ; les hydrates de carbone, notamment les sucres, et leurs sels ou dérivés, l'acide lignosulfonique, les acides phosphoniques et leurs sels ou dérivés ou les acides inorganiques comme l'acide phosphorique, leurs sels ou dérivés, ou un de leurs mélanges.

4. Composition selon la revendication 2, dans laquelle le retardateur de prise hydrosoluble est choisi parmi le glucose, le fructose, le saccharose, le méritose, le lactose, le maltotriose, le dextrose, le maltose, le galactose, le mannose, le glycogène ou l'un de leurs mélanges.

5. Composition selon la revendication 2, dans laquelle le retardateur de prise hydrosoluble est choisi parmi l'acide citrique, l'acide tartrique, l'acide malique, l'acide gluconique, l'acide maléique, l'acide lactique, leurs sels ou l'un de leurs mélanges.

6. Composition selon la revendication 2, dans laquelle le retardateur de prise liposoluble est choisi parmi les esters alkyliques d'acides hydroxycarboxyliques.

7. Composition selon l'une des revendications 1 à 6, dans laquelle l'agent filmogène hydrosoluble est choisi parmi l'alcool polyvinylique, la polyvinylpyrrolidone ou les polysaccharides.

8. Composition selon à la revendication 7, dans laquelle l'alcool polyvinylique est choisi avec un degré d'hydrolyse compris entre 50% et 99%, et la masse molaire moyenne comprise entre 10 000 et 100 000 g/mol.

9. Composition selon l'une des revendications 1 à 8, dans laquelle l'huile comprend un mélange de corps gras d'origine minérale, synthétique animale et/ou végétale.

10. Composition selon l'une des revendications 1 à 9, dans laquelle le latex non alcalisoluble est un latex acrylique ou méthacrylique, un copolymère styrène acrylique, un copolymère styrène butadiène, un copolymère ester acrylique - ester vinylique, un copolymère acétate de vinyle - versatate de vinyle ou un copolymère acétate de vinyle - éthylène.

11. Procédé de préparation d'une composition selon l'une des revendications 1 à 10, comprenant les étapes de :
(1) préparation d'une phase aqueuse comprenant le cas échéant un retardateur de prise hydrosoluble ;
(2) introduction et dissolution, notamment par chauffage, de préférence à une température minimale de 80°C, d'un agent filmogène hydrosoluble ;
(3) introduction d'une huile comprenant le cas échant au moins un retardateur de prise liposoluble ;
(4) introduction du latex et des autres additifs éventuels ; et
(5) agitation pour former une dispersion ou une émulsion.

12. Procédé de fabrication de pièces préfabriquées désactivées à partir d'une composition à base de liant hydraulique, notamment d'un béton, comprenant les étapes de :
(i) enduction d'un moule avec une composition selon l'une des revendications 1 à 10;
(ii) introduction de la composition à base de liant hydraulique fraîche, notamment d'un mortier ou béton, dans le moule ainsi enduit, le cas échéant après séchage du revêtement formé ;
(iii) retrait de la pièce moulée durcie du moule ; et
(iv) élimination de la pellicule désactivée de la surface de la pièce moulée.

13. Utilisation de la composition selon l'une des revendications 1 à 10 pour la désactivation négative d'une pièce en matériau à base de liant hydraulique.

14. Utilisation de la composition selon la revendication 13, pour faciliter le démoulage de ladite pièce.

## Patentansprüche

1. Bei der Lagerung stabile wässrige Dispersion oder Emulsion, die Folgendes umfasst:
- wenigstens einen Verzögerer;
- wenigstens einen wasserlöslichen filmbildenden Wirkstoff;
- ein Öl; und
- einen nicht alkalilöslichen Latex.

2. Zusammensetzung nach Anspruch 1, wobei der Verzögerer ein wasserlöslicher oder fettlöslicher Verzögerer oder ein Gemisch dieser Verzögerer ist.

3. Zusammensetzung nach Anspruch 2, wobei der wasserlösliche Verzögerer gewählt ist aus Carbonsäuren und ihren Salzen oder Derivaten; Kohlenwasserstoffen, insbesondere Zuckern und ihren Salzen oder Derivaten, Lignosulfonsäure, Phosphonsäuren und ihren Salzen oder Derivaten oder anorganischen Säuren wie Phosphorsäure, ihren Salzen oder Derivaten oder einem ihrer Gemische.

4. Zusammensetzung nach Anspruch 2, wobei der wasserlösliche Verzögerer gewählt ist aus Glukose, Fruktose, Saccharose, Meritose, Laktose, Maltotriose, Dextrose, Maltose, Galaktose, Mannose, Glykogen oder einem ihrer Gemische.

5. Zusammensetzung nach Anspruch 2, wobei der wasserlösliche Verzögerer gewählt ist aus Zitronensäure, Weinsäure, Apfelsäure, Gluconsäure, Maleinsäure, Milchsäure, ihren Salzen oder einem ihrer Gemische.

6. Zusammensetzung nach Anspruch 2, wobei der fettlösliche Verzögerer gewählt ist aus Alkylestern von Hydrocarboxylsäuren.

7. Zusammensetzung nach einem der Ansprüche 1 bis 6, wobei der wasserlösliche filmbildende Wirkstoff gewählt ist aus Polyvinylalkohol, Polyvinylpyrrolidon und Polysacchariden.

8. Zusammensetzung nach Anspruch 7, wobei der Polyvinylalkohol mit einem Hydrolysegrad im Bereich von 50 % bis 99 % und einer mittleren Molmasse im Bereich von 10000 bis 100000 g/mol gewählt ist.

9. Zusammensetzung nach einem der Ansprüche 1 bis 8, wobei das Öl ein Fettkörpergemisch mit mineralischem, synthetischem tierischem und/oder pflanzlichem Ursprung enthält.

10. Zusammensetzung nach einem der Ansprüche 1 bis 9, wobei der nicht alkalilösliche Latex ein Acryl- oder Metacryl-Latex, ein Acryl-Styrol-Copolymer, ein Butadien-Styrol-Copolymer, ein Acrylester-Copolymer - Vinylester, Vinylacetat-Copolymer - Vinylversatat oder ein Vinylacetat-Ethylen-Copolymer ist.

11. Verfahren zum Bereitstellen einer Zusammensetzung nach einem der Ansprüche 1 bis 10, das die folgenden Schritte umfasst:
(1) Bereitstellen einer wässrigen Phase, die gegebenenfalls einen wasserlöslichen Verzögerer enthält;
(2) Einleiten und Auflösen insbesondere durch Erwärmen vorzugsweise bei einer Mindesttemperatur von 80 °C eines wasserlöslichen filmbildenden Wirkstoffs;
(3) Einleiten eines Öls, das gegebenenfalls wenigstens einen fettlöslichen Verzögerer enthält;
(4) Einleiten eines Latex und anderer eventueller Additive; und
(5) Umrühren, um eine Dispersion oder eine Emulsion zu bilden.

12. Verfahren für die Herstellung deaktivierter vorgefertigter Teile anhand einer Zusammensetzung auf der Basis eines hydraulischen Bindemittels, insbesondere eines Betons, das die folgenden Schritte umfasst:
(i) Bestreichen einer Form mit einer Zusammensetzung nach einem der Ansprüche 1 bis 10;
(ii) Einleiten der Zusammensetzung auf der Basis eines frischen hydraulischen Bindemittels, insbesondere eines Mörtels oder Betons, in die somit bestrichene Form gegebenenfalls nach dem Trocknen der gebildeten Beschichtung;
(iii) Entnehmen des gehärteten gegossenen Teils aus der Form; und
(iv) Beseitigen der deaktivierten Haut auf der Oberfläche des gegossenen Teils.

13. Verwendung der Zusammensetzung nach einem der Ansprüche 1 bis 10 für die negative Deaktivierung eines Teils aus einem Material auf der Basis eines hydraulischen Bindemittels.

14. Verwendung der Zusammensetzung nach Anspruch 13, um das Entformen des Teils zu erleichtern.

## Claims

1. Storage-stable aqueous dispersion or emulsion comprising:
- at least one set retarder;
- at least one water-soluble film-forming agent;
- an oil; and
- an alkali-insoluble latex.

2. Composition according to Claim 1, in which the set retarder is a water-soluble or fat-soluble set retarder or a mixture of these retarders.

3. Composition according to Claim 2, in which the water-soluble set retarder is chosen from carboxylic acids and their salts or derivatives; carbohydrates, especially sugars, and their salts or derivatives, lignosulfonic acid, phosphonic acids and their salts or derivatives or inorganic acids such as phosphoric acid, their salts or derivatives, or a mixture thereof.

4. Composition according to Claim 2, in which the water-soluble set retarder is chosen from glucose, fructose, sucrose, meritose, lactose, maltotriose, dextrose, maltose, galactose, mannose, glycogen or a mixture thereof.

5. Composition according to Claim 2, in which the water-soluble set retarder is chosen from citric acid, tartaric acid, malic acid, gluconic acid, maleic acid, lactic acid, their salts or a mixture thereof.

6. Composition according to Claim 2, in which the fat-soluble set retarder is chosen from alkyl esters of hydroxycarboxylic acids.

7. Composition according to one of Claims 1 to 6, in which the water-soluble film-forming agent is chosen from polyvinyl alcohol, polyvinylpyrrolidone or polysaccharides.

8. Composition according to Claim 7, in which the polyvinyl alcohol is chosen with a degree of hydrolysis of between 50% and 99%, and the average molar mass of between 10 000 and 100 000 g/mol.

9. Composition according to one of Claims 1 to 8, in which the oil comprises a mixture of fatty substances of mineral, synthetic, animal and/or vegetable origin.

10. Composition according to one of Claims 1 to 9, in which the alkali-insoluble latex is an acrylic or methacrylic latex, an acrylic styrene copolymer, a styrene-butadiene copolymer, an acrylic ester-vinyl ester copolymer, a vinyl acetate-vinyl versatate copolymer or a vinyl acetate-ethylene copolymer.

11. Process for preparing a composition according to one of Claims 1 to 10, comprising the steps of:
(1) preparing an aqueous phase comprising, where appropriate, a water-soluble set retarder;
(2) introducing and dissolving, especially by heating, preferably at a minimum temperature of 80°C, a water-soluble film-forming agent;
(3) introducing an oil comprising, where appropriate, at least one fat-soluble set retarder;
(4) introducing the latex and other optional additives; and
(5) stirring to form a dispersion or an emulsion.

12. Process for manufacturing deactivated prefabricated parts starting from a composition based on a hydraulic binder, in particular a concrete, comprising the steps of:
(i) coating a mould with a composition according to one of Claims 1 to 10;
(ii)introducing the fresh composition based on a hydraulic binder, in particular a mortar or concrete, into the mould thus coated, where appropriate after drying of the coating formed;
(iii) removal of the hardened moulded part from the mould; and
(iv) removing the deactivated film from the surface of the moulded part.

13. Use of the composition according to one of Claims 1 to 10, for the negative deactivation of a part made of material based on a hydraulic binder.

14. Use of the composition according to Claim 13, to facilitate the demoulding of said part.
